(19) Europäisches Patentamt
European Patent Office
Office européen des brevets

(11) EP 1 320 695 B1

(12) **EUROPÄISCHE PATENTSCHRIFT**

(45) Veröffentlichungstag und Bekanntmachung des Hinweises auf die Patenterteilung:
**29.03.2006 Patentblatt 2006/13**

(21) Anmeldenummer: **01978148.3**

(22) Anmeldetag: **17.09.2001**

(51) Int Cl.:
***F16D 48/06*** *(2006.01)*

(86) Internationale Anmeldenummer:
**PCT/DE2001/003580**

(87) Internationale Veröffentlichungsnummer:
**WO 2002/025132 (28.03.2002 Gazette 2002/12)**

# (54) VERFAHREN ZUM REGELN EINER AUTOMATISCHEN KRAFTFAHRZEUGKUPPLUNG

METHOD FOR REGULATING AN AUTOMATIC MOTOR VEHICLE CLUTCH

PROCEDE DE REGLAGE D'UN EMBRAYAGE AUTOMATIQUE DE VEHICULE

(84) Benannte Vertragsstaaten:
**DE FR**

(30) Priorität: **18.09.2000 DE 10046105**

(43) Veröffentlichungstag der Anmeldung:
**25.06.2003 Patentblatt 2003/26**

(73) Patentinhaber: **SIEMENS AKTIENGESELLSCHAFT**
**80333 München (DE)**

(72) Erfinder:
- **BAMBERGER, Joachim**
**82131 Stockdorf (DE)**
- **HORN, Joachim**
**80689 München (DE)**
- **MICHAU, Peter**
**38102 Braunschweig (DE)**
- **NOCK, Ernst**
**88069 Tettnang (DE)**

(56) Entgegenhaltungen:
**EP-A- 0 628 742** **DE-A- 19 504 847**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren nach dem Oberbegriff von Anspruch 1, wie es aus DE-A-19504847 bekannt ist. Eine solche Kraftfahrzeugkupplung weist ein Stellglied zum Betätigen der Kupplung und ein elektromagnetisch betätigtes Ventil auf, mit dessen Spulenstrom ein Volumenstrom gesteuert wird, der in dem Stellglied einen Druck aufbaut und damit die Position der Kupplung festlegt, indem aus einem Positionssollwert und dem Istwert der Position eine Regelabweichung ermittelt und daraus ein Regelsignal berechnet wird, mit dem die Kupplungsposition gesteuert wird.

Neben den herkömmlichen durch den Fahrer direkt betätigten Kraftfahrzeugkupplungen werden zunehmend automatisch betätigte Kupplungen in Kraftfahrzeugen eingesetzt (siehe zum Beispiel DE 44 34 111 A1, DE 38 31 449 A1). Da es sich bei der Regelung der Kupplungslage um eine nicht lineare Regelungsaufgabe handelt, müssen aufwendige Anpassungen durchgeführt werden, wenn ein geeigneter bekannter Regler, zum Beispiel ein PID-Regler, verwendet werden soll.

Der Erfindung liegt die Aufgabe zugrunde, ein Verfahren zum Steuern einer automatisch betätigten Kraftfahrzeugkupplung zu schaffen, deren Funktion jederzeit gesichert ist. Insbesondere soll eine möglichst genaue Regelung der Kupplungslage mit einem Messen von Zustandsgrößen erreicht werden.

Die Aufgabe der Erfindung wird durch ein Verfahren nach Anspruch 1 gelöst. Bei dem Verfahren wird ein Modell der durch das Ventil, das Stellglied und die Kupplung gebildeten Regelstrecke erstellt und von diesem Modell ein inverses Streckenmodell abgeleitet wird. Mit dem inversen Streckenmodell wird der Spulenstrom des Ventils gesteuert.

Zweckmäßige Weiterbildungen der Erfindung sind in den Unteransprüchen niedergelegt.

Die Vorteile der Erfindung liegen insbesondere darin, dass sich Nichtlinearitäten der Regelstrecke exakt kompensieren lassen.

Ausführungsbeispiele der Erfindung werden im folgenden anhand der Zeichnungen erläutert. Es zeigen:

| | |
|---|---|
| Figur 1 | einen Kraftfahrzeugantrieb mit einer automatisch betätigten Kupplung gemäß der Erfindung ; |
| Figur 2 | ein Blockschaltbild eines Kupplungsbetätigungssystems; |
| Figur 3 | ein Streckenmodell einer Kupplungslagesteuerung; |
| Figur 4 | eine modellhafte Darstellung eines Steuerungsalgorithmus der Kupplungslagesteuerung nach Figur 3; |
| Figur 5 | eine modellhafte Darstellung der Strecke der Kupplungslagesteuerung nach Figur 3; |
| Figur 6 | der Hydraulikölfluss in der Kupplungsbetätigung als Funktion von elektrischem Steuerstrom und Druckdifferenz; |
| Figur 7 | den elektrischen Steuerstrom in der Kupplungbetätigung als inverse Funktion von Hydraulikölfluss und Druckdifferenz; |
| Figur 8 | einen Vergleich des zeitlichen Verlaufs der Sollposition und der Istposition der Kupplung bei einem Kupplungsbetätigungssystem nach Figur 2, und |
| Figur 9 | den zeitlichen Verlauf des als Stellgröße bei einem Kupplungsbetätigungssystem nach Figur 2 dienenden Spulenstroms. |
| Figur 10 | ein Ablaufdiagramm eines in dem Kupplungsbetätigungssystem nach Figur 2 abgearbeiteten Programms. |

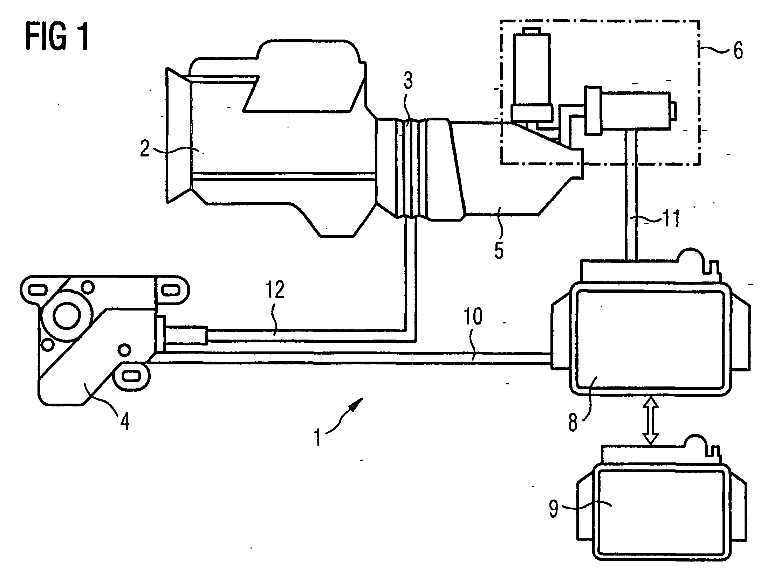

Ein Kraftfahrzeugantrieb 1 (Figur 1) weist - soweit er für die vorliegende Erfindung von Bedeutung ist - folgende Bestandteile auf: einen Motor 2, eine Kupplung 3, einen Kupplungsaktuator (im folgenden auch als Stellglied oder Stellantrieb für die Kupplung bezeichnet) 4, ein Schaltgetriebe 5, einen Getriebeaktuator 6, eine elektronische Steuerung 8 für das Stellglied 4 und den Getriebeaktuator 6 sowie eine Motorsteuerung 9. Die elektronische Steuerung 8 ist mit dem Stellglied 4 durch Steuer- und Signalleitungen 10 und mit dem Getriebeaktuator 6 durch Steuer- und Signalleitungen 11 verbunden.

Das Stellglied 4 kann als elektromotorisch angetriebener oder als hydraulisch angetriebener Aktuator ausgebildet sein. Im hier beschriebenen Ausführungsbeispiel wird ein hydraulisches Stellglied 4 verwendet, das mit der Kupplung 3 durch eine Kraftübertragungsanordnung 12 verbunden ist, die zum Beispiel als Druckleitung ausgebildet ist.

Bei dem Kraftfahrzeugantrieb 1 ist in dem vorliegenden Ausführungsbeispiel zwar das Schaltgetriebe 5 konstruktiv wie ein Handschaltgetriebe ausgebildet, die Schaltvorgänge werden aber automatisch durchgeführt und die Kupplung 3 wird - durch die elektronische Steuerung 8 gesteuert - betätigt, sobald die Steuerung einen Schaltvorgang einleitet. Ein solches Getriebe wird als automatisches (oder auch: automatisiertes) Handschaltgetriebe, abgekürzt ASG, bezeichnet. Die erfindungsgemäße Kupplungssteuerung kann auch mit automatisch gesteuerten Kupplungen (als EKS bezeichnet) für übliche Handschaltgetriebe verwendet werden, die betätigt werden, sobald der Fahrer an den Schalthebel greift, um einen Gangwechsel durchzuführen, oder aber mit vollautomatischen Schaltgetrieben, die allerdings in der Regel mit einer Nasskupplung oder einem Strömungswandler versehen sind.

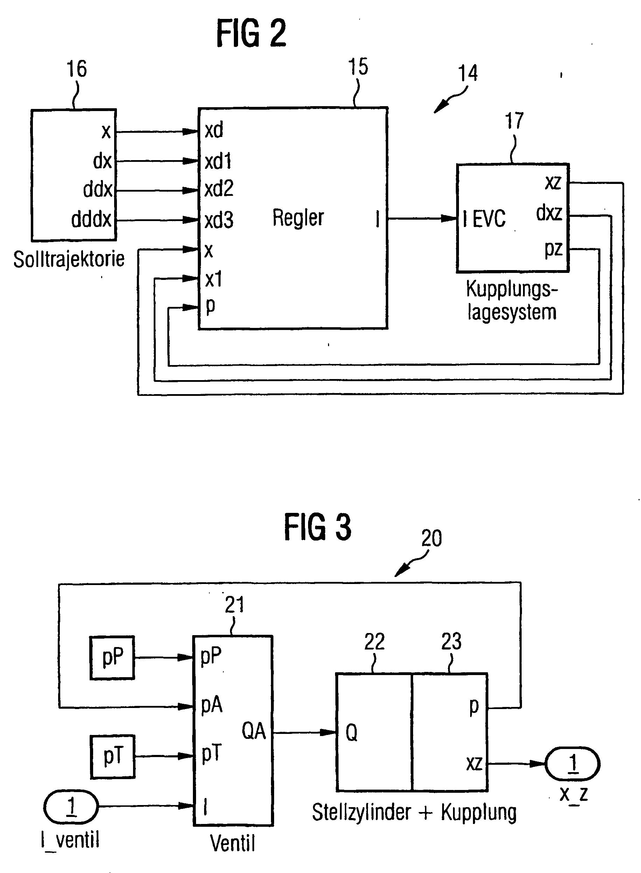

Das vereinfachte Blockschaltbild (Figur 2) eines nach dem erfindungsgemäßen Verfahren gesteuerten Kupplungsbetätigungssystems 14 weist auf einen elektronischen Regler 15, dem eine Reihe von Eingangsgrößen 16 zugeführt werden, die hier zusammenfassend als Solltrajektorien (oder auch: Sollverläufe) bezeichnet werden. Die Eingangsgrößen sind: die Solltrajektorie für die Position oder Lage x der Kupplung (sie entspricht auch der Position eines hier nicht dargestellten da bekannten Zentralausrückers der Kupplung) und die erste bis dritte zeitliche Ableitung dx, ddx, dddx der Kupplungsposition.

Von einem Kupplungslagesystem 17 werden außerdem die Zustandsgrößen Istposition xz, deren erste zeitliche Ableitung dxz und der Druck pz eines hydraulischen Kupplungsstellzylinders auf Eingänge des Reglers 15 rückgeführt. Durch den Kupplungsstellzylinder, der hier, da er allgemein bekannt ist, nicht im einzelnen dargestellt ist, wird die Kupplung betätigt. Der Regler 15 erzeugt darauf hin an seinem Signalausgang ein Signal in Form eines Steuer- oder Spulenstroms I, das auf das Kupplungslagesystem 17, das ein elektromagnetisches Hydraulikventil EVC einschließt, als Stellsignal I_EVC gegeben wird.

Aus Figur 3 ist ein detaillierteres Streckenmodell 20, das heißt ein Modell des zu steuernden Kupplungslagesystems 17, ersichtlich. Ein hydraulisches Ventil 21 empfängt als Eingangsgrößen einen Systemdruck pP, einen Arbeitsdruck pA, einen Tankdruck pT und - über einen Signaleingang (1) - den Ventil- oder Spulenstrom I_ventil. Es erzeugt daraus ein Ausganssignal QA und steuert damit einen Volumenstrom Q; der in einem Stellzylinder 22 einen Druck aufbaut, welcher eine Kupplung 23 positioniert, das heißt in eine gewünschte Lage xz verbringt, die der Istposition der Strecke entspricht und die als Signal x_z an einem Ausgang der Kupplung 23 ausgegeben wird. Der in dem Stellzylinder 22 der Kupplung 23 aufgebaute Druck p entspricht dem Arbeitsdruck pA, er wirkt auch auf das Ventil 21 zurück.

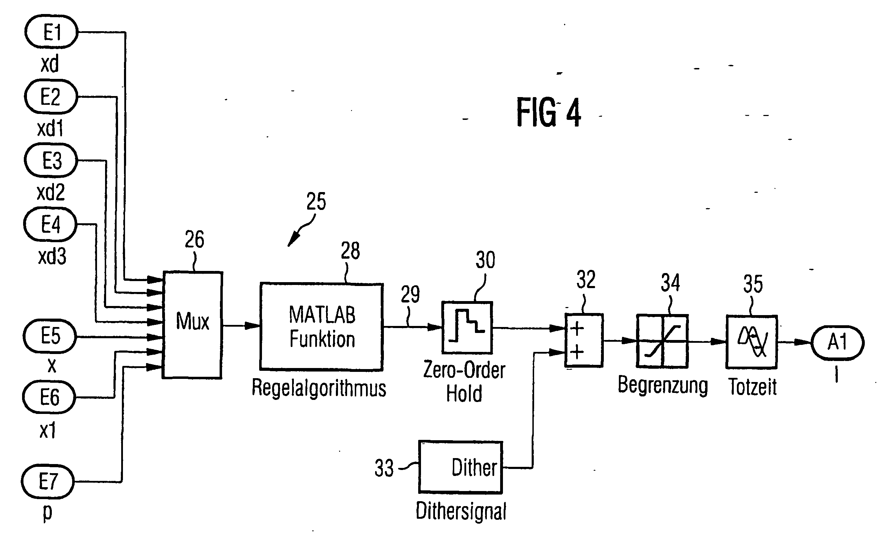

Bei dem aus Figur 4 ersichtlichen Strukturmodell eines Steuerungsalgorithmus 25 der Kupplungslagesteuerung werden einem Multiplexer 26 über Signaleingänge E1 bis E7 folgende Trajektorien oder Verläufe eingegeben: der Positionssollwert xd und dessen zeitliche Ableitungen xd1, xd2 und xd3, der Positionsistwert x und dessen zeitlicher Ableitung x1 sowie der Istwert p des Zylinderdrucks. In einem mit dem Ausgang des Multiplexers 26 verbundenen Programmblock Regelagorithmus 28 wird aus diesen Eingangssignalen ein Steuersignal 29 berechnet und in einem Abtasthalteglied 30 digitalisiert.

In dem Programmblock 28 ist ein Programm abgelegt, das mit einem im Handel unter der Bezeichnung MATLAB erhältlichen Programmentwicklungswerkzeug ("Software tool") erstellt worden ist, mit welchem Regelalgorithmen entwickelt werden können.

Dem Ausgangssignal des Abtasthalteglieds 30 wird in einem Addierglied 32 ein Dither-Signal, das in einem Block 33 erzeugt wird, addiert, um Magnethysterese und Reibungseffekte im Ventil zu reduzieren. In einer Begrenzerschaltung 34 wird die Signalamplitude beidseitig begrenzt und mit einem Zeitglied 35 wird eine durch die Funktionsauswertung verursachte Totzeit dargestellt. An einem Signalausgang A1 wird schließlich ein das Stellsignal darstellender Strom I ausgegeben.

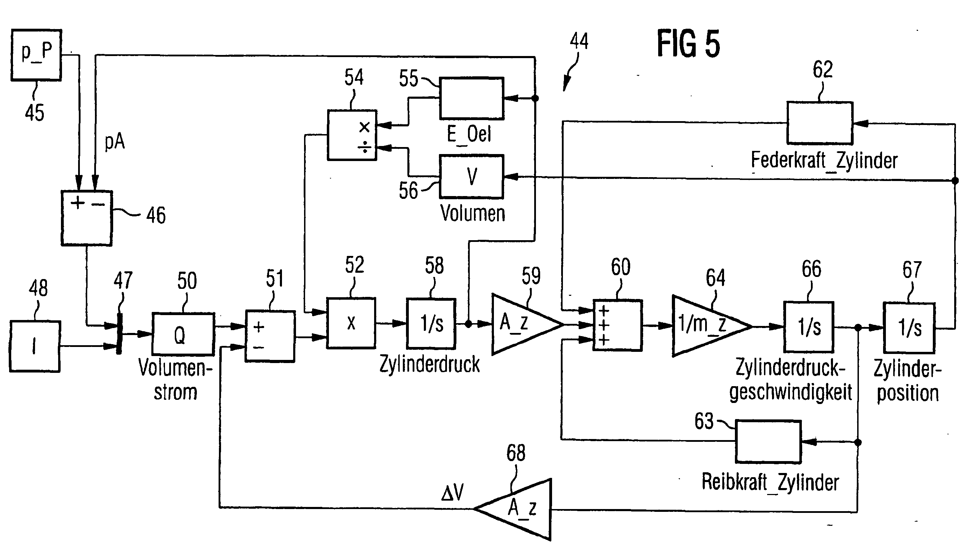

Ein Streckenmodell 44 des Kupplungsbetätigungssystems ist in Figur 5 bei geöffnetem Steuerdurchlass P-A dargestellt, das heißt bei geöffnetem Durchlass zwischen dem Raum, in dem ein Systemdruck herrscht und dem Raum, in dem ein Arbeitsdruck herrscht. Die Strecke weist folgende Blöcke auf: einen Eingang 45, an dem der Systemdruck p_P anliegt (Anmerkung: die Größen pP, $p_p$ und p_P usw. sind gleichbedeutend, die unterschiedliche Schreibweise beruht auf unterschiedlichen Notationen in verschiedenen verwendeten Programmen) Von dort gelangt p_P zu dem Pluseingang eines Addierers 46, an dessen Minuseingang der Zylinder- oder Arbeitsdruck pA anliegt. Sein Ausgangssignal wird in einem Multiplexer 47 mit dem Spulenstrom I, der an einem Eingang 48 anliegt, zu einem Vektorsignal zusammengefasst.

Der Ausgang des Multiplexers 47 ist mit einem Block 50 verbunden, der den Volumenstrom Q berechnet und ihn auf den Pluseingang eines Addierers 51 mit einem negiertem Eingang gibt. Auf dessen negierten oder Minuseingang wird eine Volumenänderung $\Delta V$ gegeben, und die sich ergebende Differenz wird in einem Multiplizierer 52 mit dem Ausgangssignal eines Dividiergliedes 54 multipliziert. Auf den Zählereingang des Dividierers 54 gelangt der Elastizitätsmodul E_Oel der Gesamtanordnung, einschließlich des Hydrauliköls, der in einem Block 55 abhängig von dem Zylinderdruck ermittelt wird. An den Nennereingang des Dividiergliedes 54 wird das in einem Block 56 abhängig von der Zylinderposition ermittelte Volumen V des hydraulischen Kupplungsbetätigungssystems einschließlich des Stellzylinders 22 gelegt.

In einem Integrierglied 58 wird aus dem Ausgangssignal des Multiplizierers 52 der Zylinderdruck berechnet und an den Minuseingang des Addierers 46 sowie an den Eingang eines als Multiplizierer dienenden Verstärkers 59 gelegt. In diesem wird er mit der wirksamen Zylinderfläche A multipliziert. Das Ergebnis gelangt an einen Eingang eines Addierers 60, an dessen zweiten Eingang die auf den Stellzylinder einwirkende Federkraft des Zylinders F_feder gelangt, die in einem Block 62 aus der Zylinderposition berechnet wird. An einen dritten Eingang des Addierers 60 wird die in dem Stellzylinder auftretende Reibkraft des Zylinders F_reib gelegt, die in einem Block 63 ermittelt wird.

Das Ausgangssignal des Addierers 60 gelangt zu einem Verstärker 64, und wird dort durch die bewegte Masse m_z dividiert. In einem Integrierglied 66 wird das Ergebnis der Division integriert und damit die Zylindergeschwindigkeit berechnet. Durch nochmalige Integration in einem Integrierglied 67 wird die Zylinderposition berechnet und auf den Eingang des Blocks 62 und des Blocks 56 gelegt. Die Zylindergeschwindigkeit wird einerseits auf den Eingang des Blocks 63 und andererseits auf den Eingang eines Verstärkers 68 gelegt, in dem sie mit der wirksamen Zylinderfläche A_z multipliziert wird. Das Ergebnis der Multiplikation ist eine Volumenänderung ΔV im Zylinder, die auf einen Minuseingang des Addierers 51 gelegt wird.

Die Strecke 44 (Figur 5) der Kupplungsbetätigung lässt sich durch folgende drei Differentialgleichungen beschreiben:

$$\dot{x}_z = v_z \qquad \text{(I)}$$

$$\dot{v}_z = \frac{1}{m_z}\left(F^z{}_{Feder}(x_z) + A_z p + F^z{}_{Reib}(v)\right) \qquad \text{(II)}$$

$$\dot{p} = \frac{E_{öl}(p)}{V(x_z)}\left(Q(\Delta p, x_v) - A_z v_z\right) \qquad \text{(III)}$$

Darin sind:

- $x_z$ die Position der Kupplung oder des Stellzylinders
- $v_z$ die Geschwindigkeit der Kupplung oder des Stellzylinders
- $m_z$ die bewegte Masse
- $A_z$ die wirksame Fläche des Stellzylinders
- $p$, $\dot{p}$ der Druck im Stellzylinder und dessen Ableitung
- $E_{öl}$ den druckabhängigen Elastizitätsmodul der Gesamtanordnung
- $V$ das Volumen der Gesamtanordnung
- $Q$ der Volumenstrom von Hydraulikflüssigkeit
- $x_v$ die Position des Ventilschiebers und
- $\Delta p$ eine Druckdifferenz, die gegeben ist durch:

$$\Delta p = \begin{cases} p_P - p & \text{bei geöffnetem Steuerdurchlass P-A} \\ p - p_T & \text{bei geöffnetem Steuerdurchlass A-T ,} \end{cases} \qquad \text{(IV)}$$

wobei p für den Druck in einem Arbeitsdruckanschluss A, Pp für den Druck in einem Sytemdruckanschluss P und $p_T$ für den Druck in einem (Vorrats-)Tankanschluss T stehen.

Der Volumenstrom $Q$ ist eine Funktion dieser Druckdifferenz und der Ventilschieberposition $x_V$.

Die Ventilschieberposition $x_V$ und die Ventilschiebergeschwindigkeit $V_V$ berechnen sich wie folgt

$$\dot{x}_v = v_v \qquad \text{(V)}$$

$$\dot{v}_v = \frac{1}{m_v}\left(F_{Magnet}(I, x_v) + F^v_{Feder}(x_v) + F_{Str}(\Delta p, Q, x_v) + F^v_{Reib}(v_v)\right) \qquad \text{(VI)}$$

Für die tatsächliche Steuerung des Kupplungslagesystems wird das vereinfachte Streckenmodell 44 (Figur 5) verwendet. Dabei wird die hochfrequente Dynamik des Ventilschiebers vernachlässigt und die Ventilschieberposition durch eine algebraische Gleichung der Form

$$x_v^s = x_v^s(I, \Delta p, Q) \qquad \text{(VII)}$$

anstelle der Differentialgleichung (V) beschrieben. Damit ergibt sich der Volumenstrom *Q* als Funktion des Spulenstroms I und des Differenzdrucks $\Delta p$ :

$$Q = Q_s(I, \Delta P) \qquad \text{(VIII)}$$

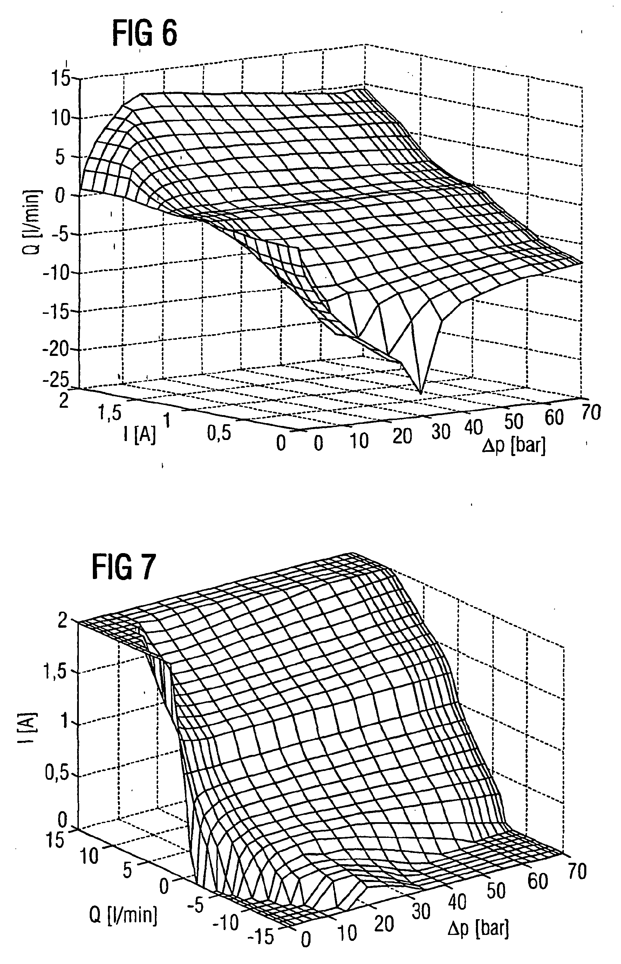

Diese Funktion, die den stationären Durchfluss Q in Abhängigkeit der beiden Größen *I* und $\Delta p$ darstellt, wird numerisch ermittelt. Sie ist aus Figur 6 ersichtlich.

Es ergeben sich somit folgende Differentialgleichungen:

$$\dot{x}_z = v_z \qquad \text{(IX)}$$

$$\dot{v}_z = \frac{1}{m_z}(F^z_{Feder}(x_z) + A_z p + F^z_{\mathrm{Re}\,ib}(v_z)) \qquad \text{(X)}$$

$$\dot{p} = \frac{E_{Öl}(p)}{V(x_z)}(Q_s(I, \Delta p) - A_z v_z) \qquad \text{(XI)}$$

Eine Berechnung der einzelnen Blöcke von Figur 5 erfolgt in einem Ausführungsbeispiel gemäß nachstehender Gesetzmäßigkeiten.

Es lässt sich mathematisch zeigen, dass es sich bei dem Ausgangssignal der Strecke 44 um einen flachen Ausgang handelt, das heißt dass jede Zustandsgröße x, v und p sowie das Systemeingangssignal I als Funktion des Ausgangs y und dessen zeitlichen Ableitungen dargestellt werden können.

Im folgenden werden zur Vereinfachung der Darstellung die Indizes *z* und *Öl* der vorstehenden Gleichungen weggelassen. Es wird eine Folgeregelung mit linearer Fehlerdynamik durchgeführt, und zwar mit einer exakten Linearisierung.

Da bei dem Streckenmodell der relative Grad mit der Systemordnung übereinstimmen, erhält man durch eine Linearisierung des Ein-Ausgangverhaltens gleichzeitig eines Zustandslinearisierung bezüglich der transformierten Zuständ x, $\dot{x}$ und $\ddot{x}$. Hierzu wird zunächst ein neuer Eingang $\alpha$ eingeführt. Das gewünschte lineare Übertragungsverhalten vom neuen Eingang $\alpha$ zum Ausgang y wird durch eine Differentialgleichung

$$\alpha = y + b_1\dot{y} + b_2\ddot{y} + b_3\dddot{y} \qquad \text{(XII)}$$

beschrieben. Durch Einsetzen der Werte von y und deren Ableitungen und durch Auflösen nach I ergibt sich folgendes Regelungsgesetz der Zustandslinearisierung

$$I = Q_S^{-1}(Q_{ZL}, \Delta p) \qquad \text{(XIII)}$$

mit

$$\dot{Q}_{ZL} = \frac{1}{A}\frac{V(x)}{E(p)}\Big(\frac{m}{b_3}(\alpha - x - b_1 v - b_2 \frac{1}{m}(F_{Feder}(x) + Ap + F_{Reib}(v))) - \\ -\frac{\partial F_{Feder}(x)}{\partial x} v - \frac{\partial F_{Reib}(v)}{\partial v}\frac{1}{m}(F_{Feder}(x) + F_{Feder}(x) + Ap + F_{Reib}(v))) + Av \qquad \text{(XIV)}$$

Durch Vorgabe der Reglerparameter $b_1$, $b_2$ und $b_3$ kann das gewünschte Ein- und Ausgangs-Verhalten des Kupplungslagesystems eingestellt werden. Man erhält für den Regelfehler

$$e = y - y_d \qquad \text{(XVI)}$$

folgende lineare Differentialgleichung

$$e + b_1\dot{e} + b_2\ddot{e} + b_3\dddot{e} = 0 \qquad \text{(XVII)}$$

Es wird allgemein eine Vorsteuerung folgender Form

$$\alpha = y_d + c_1\dot{y}_d + c_2\ddot{y}_d + c_3\dddot{y}_d \qquad \text{(XVIII)}$$

verwendet, wobei der Subindex d für den gewünscht Wert oder Sollwert steht. Die Übertragungsfunktion von $y_d$ nach y ergibt sich dann zu

$$\frac{Y(s)}{Y_d(s)} = \frac{1 + c_1 s + c_2 s^2 + c_3 s^3}{1 + b_1 s + b_2 s^2 + b_3 s^3}, \qquad \text{(XIX)}$$

worin Y(s) die Laplace-Transformierte der Kupplungs-Istposition, $Y_d(s)$ die Laplace-Transformierte der Kupplungs-Sollposition und s die Laplace-Variable der Laplace-Transformation sind.

Durch geeignete Wahl der Reglerparameter $b_1$, $b_2$, $b_3$ und $c_1$, $c_2$, $c_3$ wird eine Nullstellen-Konfiguration der Übertragungsfunktion in Abhängigkeit von der geforderten Dynamik festgelegt. Insbesondere erhält man durch die Wahl $c_3 = 0$ maximal zwei und durch $c_2 = c_3 = 0$ maximal eine Nullstelle. Mit $\alpha$ gemäß Gleichung (XII) werden $b_1 = c_1$, $b_2 = c_2$ und $b_3 = c_3$.

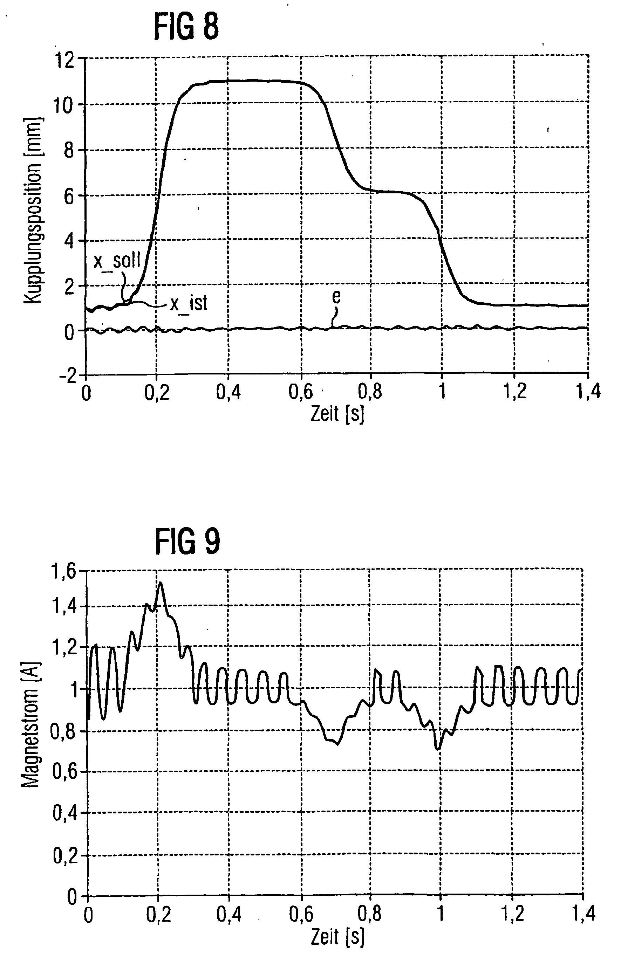

Bei der Darstellung von Figur 8 ist das Dithersignal abgeschaltet worden, um die Abweichungen der Kupplungsposition besser erkennen und beurteilen zu können. Erkennbar sind der zeitliche Verlauf der Sollposition x_soll und der Istposition x_ist der Kupplung bei einer erfindungsgemäßen Folgeregelung. Der Sollverlauf entspricht einem üblichen Kuppelvorgang. Der maximale Regelfehler beträgt etwa e = 0,15 mm. Die erreichte Regelgüte ist überzeugend.

Aus Figur 9 ist der zeitlichen Verlauf des als Stellgröße bei einem Kupplungsbetätigungssystem mit Folgeregelung dienenden Spulen- oder Magnetstroms ersichtlich. Dabei sind folgende Parameter (siehe Gleichungen XVII -

XIX) gewählt worden:

$$a_0 = 1/b_3 = 1*10^9$$
$$a_1 = b_1/b_3 = 1*10^6$$
$$a_2 = b_2/b_3 = 3*10^3 \quad .$$

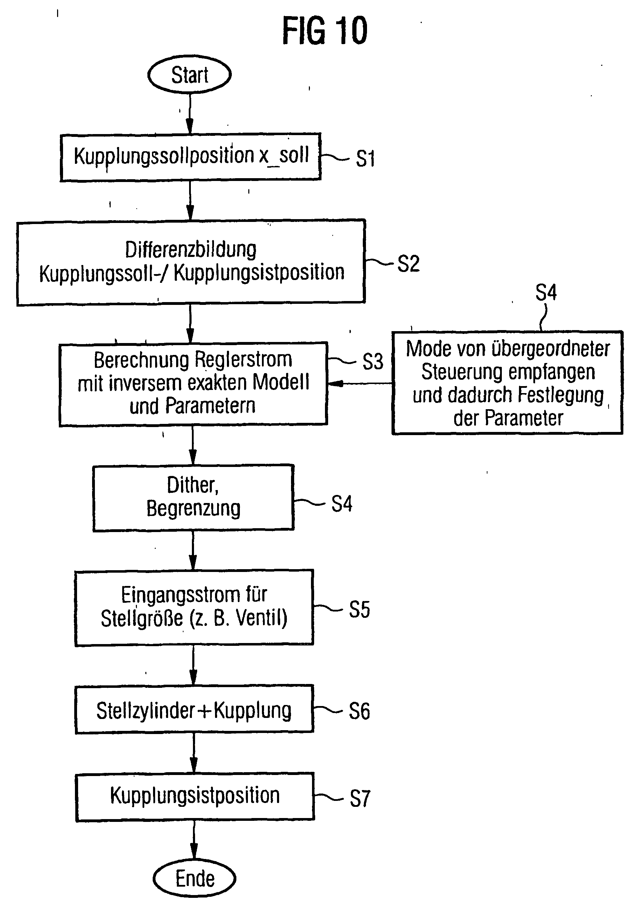

In dem aus Figur 10 ersichtlichen in dem Kupplungsbetätigungssystem 14 abgearbeiteten Programm wird nach dem

**Start** in einem Schritt

- **S1**: die Kupplungssollposition x_soll festgelegt. In einem Schritt
- **S2:** wird die Differenz Delta_x zwischen der Kupplungssollposition und der Kupplungsistposition gebildet. Dann wird in einem Schritt
- **S3:** mit einem inversen, mit Messungen verifizierten Modell der Regelstrecke und mit Parametern b1, b2, b3, c1, c2 und c3 der Reglerstrom I_R berechnet. Dazu wird in einem Schritt
- **S4:** ein "Mode" oder Betriebsmodus von einer übergeordneten Steuerung empfangen und die Parameter festgelegt. In einem Schritt
- **S5:** wird dem Reglerstromsignal ein Dithersignal aufgeprägt und es erfolgt eine Begrenzung der Signalamplitude. Das sich ergebende Signal wird in
- **S6:** als Eingangsstrom I_ventil an das Stellglied (zum Beispiel elektromagnetisch betätigtes Hydraulikventil 21) gegeben. Damit wir in
- **S7:** das Stellglied (Stellzylinder 22) bewegt und mit diesem die Kupplung 23 betätigt. Schließlich wird in
- **S8:** die Kupplungsistposition ermittelt. Damit ist ein Programmdurchlauf am
- **Ende.** Das Programm wird laufend zyklisch abgearbeitet.

Bei der vorstehend in dem Schritt S4 genannten übergeordneten Steuerung handelt es sich zweckmäßigerweise um einen sogenannten AMT-Manager, wie er zum Beispiel in der älteren internationalen Anmeldung mit dem Aktenzeichen PCT/DE00/00346 (internes Aktenzeichen 2000P0110WO) beschrieben ist.

## Patentansprüche

1. Verfahren zum Regeln einer automatischen Kraftfahrzeugkupplung (23) mit einem hydraulischen Stellglied (4) zum Betätigen der Kupplung und einem elektromagnetisch betätigten Ventil (17), mit dessen Spulenstrom ein Volumenstrom (Q) gesteuert wird, der in dem Stellglied einen Druck aufbaut und damit die Position ($x_z$) der Kupplung festlegt, indem aus einem Positionssollwert und dem Istwert der Position eine Regelabweichung (Delta_x) ermittelt und daraus ein Regelsignal berechnet wird, mit dem die Kupplungsposition gesteuert wird, **dadurch gekennzeichnet,**

   - **dass** ein Modell der durch das Ventil (12), das Stellglied (22) und die Kupplung (23) gebildeten Regelstrecke erstellt und von diesem Modell ein inverses Streckenmodell ($Q_S^{-1}$) abgeleitet wird, und
   - **dass** mit dem inversen Streckenmodell ($Q_S^{-1}$) der Spulenstrom des Ventils (17) gesteuert wird.

2. Verfahren nach Anspruch 1, **dadurch gekennzeichnet, dass** durch Rückführen der Zustandsgrößen Istposition der Kupplung, zeitliche Ableitung der Istposition der Kupplung und Arbeitsdruck in dem Zylinder des Stellglieds in den Regler die Nichtlinearitäten der Regelstrecke exakt kompensiert werden.

3. Verfahren nach Anspruch 1, **dadurch gekennzeichnet, dass** ein lineares Verhalten der Regelung durch Vorgabe von Reglerparameter $b_1$, $b_2$, $b_3$ und $c_1$, $c_2$, $c_3$ einer Übertragungsfunktion der Form

$$\frac{Y(s)}{Y_d(s)} = \frac{1 + c_1 s + c_2 s^2 + c_3 s^3}{1 + b_1 s + b_2 s^2 + b_3 s^3}$$ erreicht wird, worin Y(s) die Laplace-Transformierte der Kupplungs-Istposition, $Y_d(s)$ die Laplace-Transformierte der Kupplungs-Sollposition und s die Laplace-Variable der Laplace-Transformation sind.

**4.** Verfahren nach Anspruch 1, **dadurch gekennzeichnet, dass** zu einem mit einem Regelalgorithmus (15) erzeugten Steuersignal (I) ein Dithersignal addiert wird, mit dem die Magnethysterese und Reibungseffekte in dem Ventil (17) reduziert werden.

**5.** Verfahren nach Anspruch 1, **dadurch gekennzeichnet, dass** die Amplitude eines mit einem Regelalgorithmus (15) erzeugten Steuersignals (I) in einer Begrenzerschaltung (34) beidseitig begrenzt wird.

## Revendications

**1.** Procédé d'asservissement d'un embrayage automatique de véhicule (23), avec un actionneur hydraulique (4) pour l'actionnement de l'embrayage et avec une soupape à actionnement électromagnétique (17), avec le courant de bobine de laquelle un débit volumétrique (Q) est contrôlé, qui dans l'actionneur établit une pression et fixe à l'aide de cette dernière la position ($x_z$) de l'embrayage, par détermination d'une erreur de réglage (Delta_x) à partir de la valeur de consigne pour la position et de la valeur réelle de la position et par calcul à partir de ce dernier d'un signal d'asservissement avec lequel la position de l'embrayage est commandée,
**caractérisé en ce que**

- un modèle du système d'asservissement formé par la soupape (12), l'actionneur (22) et l'embrayage (23) est créé et à partir de ce modèle un modèle inverse ($Q_S^{-1}$) du système d'asservissement est dérivé et
- **en ce que** le courant de bobine de la soupape (17) est commandé à l'aide du modèle inverse ($Q_S^{-1}$) de système d'asservissement.

**2.** Procédé selon la revendication 1, **caractérisé en ce que** par renvoi des paramètres d'état de position réelle de l'embrayage, dérivation dans le temps de la position réelle de l'embrayage et pression de travail dans le vérin de l'actionneur vers le régulateur, la non-linéarité du système d'asservissement est précisément compensée.

**3.** Procédé selon la revendication 1, **caractérisé en ce qu'**un comportement linéaire de l'asservissement est obtenu par prescription de paramètres du régulateur b1, b2, b3 et c1, c2, c3 d'une fonction de transmission sous la forme

$$\frac{Y(s)}{Y_d(s)} = \frac{1 + c_1 s + c_2 s^2 + c_3 s^3}{1 + b_1 s + b_2 s^2 + b_3 s^3}$$

Y(s) étant la transformée de Laplace de la position réelle de l'embrayage,
$Y_d(s)$ étant la transformée de Laplace de la position de consigne pour l'embrayage et
S étant la variable de Laplace de la transformation de Laplace.

**4.** Procédé selon la revendication 1, **caractérisé en ce qu'**un signal à bruit de dispersion (I) permettant de réduire l'hystérèse magnétique et des effets de frottement dans la soupape (17) est additionné à un signal de commande généré à l'aide d'un algorithme d'asservissement (15).

**5.** Procédé selon la revendication 1, **caractérisé en ce que** l'amplitude d'un signal de commande (I) générée à l'aide d'un algorithme d'asservissement (15) est délimitée des deux côtés dans un circuit limiteur (34).

## Claims

**1.** Method for regulating an automatic motor vehicle clutch (23) with a hydraulic control element (4) for actuating the clutch and an electromagnetically actuated valve (17), with the coil current of which a volumetric flow (Q) is controlled which builds up a pressure in the control element and thereby defines the position ($x_2$) of the clutch, by determining a regulation deviation (Delta_x) between a required value and the actual value of the position and calculating a regulation signal from this with which the clutch position is controlled,
**characterized in that**,

- a model of the regulation path formed by the valve (12), the control element (22) and the clutch (23) is created and an inverse path model $Q_S^{-1}$ is derived from this, and
- the coil current of the valve (17) is controlled with the inverse path model $Q_S^{-1}$.

**2.** Method in accordance with claim 1, **characterized in that** the non-linearity of the regulation path is precisely compensated for by feeding back the status variables actual position of the clutch, time derivative of the actual position of the clutch and working pressure in the cylinder of the control element of the regulator.

**3.** Method in accordance with claim 1, **characterized in that** a linear behavior of the regulation is achieved by pre-specifying regulator parameters $b_1$, $b_2$, $b_3$ und $c_1$, $c_2$, $c_3$ of a transmission function of the form $\frac{Y(s)}{Y_d(s)} = \frac{1+c_1 s + c_2 s^2 + c_3 s^3}{1+b_1 s + b_2 s^2 + b_3 s^3}$, in which Y(s) is the Laplace-transformed value of the actual clutch position, $Y_d(s)$ is the Laplace-transformed value of the required clutch position and s is the Laplace variable of the Laplace transformation.

**4.** Method in accordance with claim 1, **characterized in that** a dither signal, with which the magnetic hysteresis and friction effects in the valve (17) are reduced, is added to a control signal (I) generated with a regulation algorithm (15).

**5.** Method in accordance with claim 1, **characterized in that** the amplitude of a control signal (I) generated with a regulation algorithm (15) is limited on both sides in a limiter circuit (34).

1
2
3
4
5
6
8
9
10
11
12

FIG 1

FIG 2
16
15
14
17
x
dx
ddx
dddx
Solltrajektorie
xd
xd1
xd2
xd3
x
x1
p
Regler
I
I EVC
xz
dxz
pz
Kupplungs-
lagesystem

FIG 3
20
21
22
23
pP
pT
1
I_ventil
pP
pA
pT
I
QA
Ventil
Q
p
xz
Stellzylinder + Kupplung
1
x_z

FIG 4
25
E1
xd
E2
xd1
E3
xd2
E4
xd3
E5
x
E6
x1
E7
p
26
Mux
28
MATLAB
Funktion
Regelalgorithmus
29
30
Zero-Order
Hold
33
Dither
Dithersignal
32
+
+
34
Begrenzung
35
Totzeit
A1
I

FIG 5
44
p_P
45
pA
+ −
46
47
I
48
Q
50
Volumen-
strom
+ −
51
x
52
× ÷
54
E_Oel
55
V
Volumen
56
1/s
58
Zylinderdruck
A_z
59
+ + +
60
62
Federkraft_Zylinder
63
Reibkraft_Zylinder
1/m_Z
64
1/s
66
Zylinderdruck-
geschwindigkeit
1/s
67
Zylinder-
position
A_z
68
ΔV

# FIG 6

15
10
5
0
-5
-10
-15
-20
-25
Q [l/min]
2
1,5
1
0,5
0
I [A]
0
10
20
30
40
50
60
70
Δp [bar]

# FIG 7

2
1,5
1
0,5
0
I [A]
15
10
5
0
-5
-10
-15
Q [l/min]
0
10
20
30
40
50
60
70
Δp [bar]

FIG 8

Kupplungsposition [mm]
12
10
8
6
4
2
0
-2
x_soll
x_ist
e
0
0,2
0,4
0,6
0,8
1
1,2
1,4
Zeit [s]


FIG 9

Magnetstrom [A]
1,6
1,4
1,2
1
0,8
0,6
0,4
0,2
0
0
0,2
0,4
0,6
0,8
1
1,2
1,4
Zeit [s]

FIG 10
Start
Kupplungssollposition x_soll
S1
Differenzbildung
Kupplungssoll-/ Kupplungsistposition
S2
S4
Berechnung Reglerstrom
mit inversem exakten Modell
und Parametern
S3
Mode von übergeordneter
Steuerung empfangen
und dadurch Festlegung
der Parameter
Dither,
Begrenzung
S4
Eingangsstrom für
Stellgröße (z. B. Ventil)
S5
Stellzylinder+Kupplung
S6
Kupplungsistposition
S7
Ende